# EUROPÄISCHE PATENTSCHRIFT

(11) **EP 2 370 704 B1**
(45) Veröffentlichungstag und Bekanntmachung des Hinweises auf die Patenterteilung: **25.03.2015**
(21) Anmeldenummer: 09801985.4
(22) Anmeldetag: 28.12.2009
(51) Int. Cl.: F16C 33/20

(54) **GLEITELEMENT**
SLIDING ELEMENT
ÉLÉMENT DE GLISSEMENT

(30) Priorität: 30.12.2008 DE 102008055194
(43) Veröffentlichungstag der Anmeldung: 05.10.2011
(60) Teilanmeldung: 14193013.1
(73) Patentinhaber: Federal-Mogul Wiesbaden GmbH, 65201 Wiesbaden (DE)
(72) Erfinder: ADAM, Achim, 64569 Nauheim (DE); SCHLÜTER, Joachim, 65187 Wiesbaden (DE)
(74) Vertreter: Mehler Achler
(86) Internationale Anmeldenummer: PCT/EP2009/067959
(87) Internationale Veröffentlichungsnummer: WO 2010/076306

(56) Entgegenhaltungen:
- EP-A1- 0 984 182
- EP-A2- 0 024 291
- EP-A2- 0 938 970
- EP-A2- 1 892 429
- DE-A1-102005 009 552
- JP-A- 2005 201 289

## Beschreibung

Die Erfindung betrifft ein Gleitelement für mediengeschmierte Anwendungen mit einem Substrat und mit mindestens einer auf dem Substrat aufgebrachten Schicht aus einem Gleitschichtmaterial. Die Erfindung bezieht sich auch auf bevorzugte Verwendungen solcher Gleitelemente.

Gleitelemente als Gleitlagerelemente in Motoren bestehen meist aus mehrschichtigen Materialien mit speziell modifizierten Oberflächen, die die Gleiteigenschaften optimieren. In der Regel handelt es sich bei den Oberflächen von Gleitlagerelementen um metallische Schichten, etwa auf der Basis von Blei, Zinn oder Aluminium, die durch galvanische Prozesse, Bedampfung oder durch mechanische Plattierung aufgebracht werden.

Außerdem sind nicht-metallische Gleitschichten bekannt, die eine Kunstharzbasis aufweisen, die hinsichtlich ihrer Eigenschaften, Belastbarkeit und Verschleißfestigkeit modifiziert sind.

Obwohl die bekannten Beschichtungen eine relativ hohe Belastbarkeit aufweisen, so ist diese Belastbarkeit jedoch scharf begrenzt, so dass bei Überschreitung der Belastbarkeitsgrenze es zu einem schnellen Ausfall der Gleitfunktion kommt. Das hiermit verbundene Freilegen des Substratmaterials, das über keine ausreichenden Notlaufeigenschaften verfügt, verursacht dann das Totalversagen des Gleitlagerelementes durch Fressen.

Gleitlagerbeschichtungen auf Kunstharzbasis werden seit vielen Jahren als Hilfsmittel zur Verringerung der Reibung in mechanischen Konstruktionen eingesetzt. In der Regel werden Metall-, Kunststoff- und Gummiteile beschichtet, die ohne weitere Schmierung dauerhaft leicht beweglich sein müssen. In den typischen Anwendungen sind die Belastungen eher gering und die Randbedingungen, wie Temperatur der Medien, sind unkritisch. Aus verschiedenen Patentanmeldungen, insbesondere aus der EP 0 984 182 A1 ist es bekannt, dass auch Anwendungen im Motor, d. h. z. B. Kurbelwellenlagerungen mit solchen Gleitlagerelementen möglich sind. In dieser Schrift wird auch ein Overlay mit einer Matrix aus PI, PAI, Epoxidharz oder einem Phenolharz beschrieben, in die zur Verschleißminderung u. a. Fe₃O₄ zugesetzt werden kann

Die DE 196 14 105 A1 offenbart eine verschleiß- und kavitationsbeständige Kunststoffgleitschicht, die aus einem Matrixmaterial aus PTFE oder thermoplastischen Fluorpolymeren Fe₂O₃ und Festschmiermittel besteht. Dieses Material wird für Lager z. B. als Führungselement bei Stoßdämpfern verwendet, und ist aufgrund seines Aufbaus und der weichen Fluorpolymer-Matrix nur für niedrige Gleitgeschwindigkeiten und niedrige Belastungen geeignet.

Aus der EP 1 775 487 A2 ist ein Gleitlagerelement bekannt, das ein metallisches Trägermaterial, eine darauf aufgebrachte Aluminiumlegierung und eine Kunststoffgleitschicht aufweist. Um die Bindungsfestigkeit und Kavitationsbeständigkeit der Kunststoffgleitschicht zu verbessern, wird ein Material vorgeschlagen, das ein Bindemittel aus PI, PAI, PBI, EP und FP sowie einen Festschmierstoff, wie MoS₂, Graphit, PTFE und BN aufweist.

Die JP 2005 201289 A beschreibt die Herstellung einer Trockenschmiermittelschicht auf der Basis eines Duroplasten, der Fe₂O₃ enthalten kann, unter Zuhilfenahme eines Silikon-Zusatzes.

Es ist Aufgabe der Erfindung, ein Gleitelement anzugeben, das bei einer verbesserten Verschleißbeständigkeit eine höhere Spitzenbelastbarkeit aufweist und bei hohen Betriebstemperaturen und Gleitgeschwindigkeiten, wie z.B. an den beweglichen Teilen innerhalb von Verbrennungsmotoren einsetzbar ist.

Diese Aufgabe wird mit einem Gleitelement mit den Merkmalen des Anspruchs 1 gelöst.

Das Substrat weist eine Rauheit R_{Z} von 1 bis 10 µm, insbesondere von 3 bis 8 µm, auf. Unter R_{Z} wird die mittlere Rautiefe nach DIN EN ISO 4287:1998 verstanden.

Die Rauheit verbessert die Haftung und führt dazu, dass bei Verschleiß zunächst nur die Spitzen, d. h. sehr geringe Oberflächenanteile des Substrats freigelegt werden, was die Tragfähigkeit erhöht, ohne gleich die Fressanfälligkeit größerer freigelegter Bereiche aufzuweisen.

Die benötigten Rauheiten können durch mechanische Verfahren wie Sandstrahlen oder Schleifen, jedoch auch chemisch durch Phosphatieren oder Anätzen erzeugt werden.

Das Gleitschichtmaterial besteht aus einem, mindestens ein vernetzbares Bindemittel oder mindestens ein hochschmelzendes Thermoplastmaterial aufweisenden Gleitlack oder aus einem Material, das eine Matrix aus mindestens einem hochschmelzenden Thermoplastmaterial oder mindestens einem Duroplastmaterial aufweist. Außerdem weist das Gleitschichtmaterial Fe₂O₃ auf.

Hierbei ist es bevorzugt, dass das Gleitschichtmaterial als Eisenoxid ausschließlich Fe₂O₃ aufweist.

Unter Gleitlack wird ein flüssiger oder pulverförmiger Beschichtungsstoff verstanden, der Zusätze zur Verbesserung der Gleitfähigkeit der Oberfläche enthält, der dünn auf ein Substrat aufgetragen wird und der durch chemische oder physikalische Vorgänge, wie z. B. Verdampfen des Lösemittels oder Aushärten mittels UV-Bestrahlung, zu einem durchgehend dünnen Film ausgebildet wird.

Das vernetzbare Bindemittel des Gleitlackes besteht vorzugsweise aus PAI (Polyamidimid), PI (Polyimid), Epoxidharz, PBI (Polybenzimidazol) und/oder Silikonharz besteht. Diese Polymere zeichnen sich durch eine hohe Temperaturbeständigkeit und hervorragende Medienbeständigkeit aus.

Gemäß einer weiteren Ausführungsform kann das Bindemittel ein mittels UV-Strahlung aushärtendes Bindemittel sein. Derartige Bindemittel sind vorzugsweise ungesättigte Polyesterharze und/oder Silikone.

Gemäß einer weiteren Ausführungsform kann der Gleitlack mindestens ein hochschmelzendes Thermoplastmaterial aufweisen.

Gemäß einer zweiten Alternative wird ein Material beansprucht, das eine Matrix aus mindestens einem hochschmelzenden Thermoplastmaterial oder mindestens einem Duroplastmaterial enthält.

Unter hochschmelzenden Thermoplastmaterialien werden solche verstanden, deren Schmelzpunkt oberhalb von 230°C liegt.

Als bevorzugte hochschmelzende Thermoplaste können vorzugsweise Polyarylate, PEEK (Polyetheretherketon) und/oder PES (Polyethersulfon) eingesetzt werden.

Bevorzugte Duroplastmaterialien sind PAI (Polyamidimid), PI (Polyimid), Epoxidharz, PBI (Polybenzimidazol) und/oder Silikonharz.

Es hat sich gezeigt, dass die beanspruchten Materialien in der Kombination mit Fe₂O₃ eine deutlich bessere Spitzenbelastbarkeit aufweisen als Gleitschichtmaterialien, die kein Eisenoxid oder gegebenenfalls andere Eisenoxide aufweisen. Es werden bis zu 20 % bessere Belastbarkeitswerte erzielt.

Es wird vermutet, dass durch die Kombination des Fe₂O₃ mit den Bindemitteln bzw. den Matrixmaterialien gemäß der beiden Alternativen die Wirksamkeit des Schmierfilms verbessert wird, wodurch der Anstieg der Verschleißrate mit der spezifischen Lagerbelastung verringert wird. Hierdurch steigt die Belastungsgrenze an, was wiederum die Betriebssicherheit der Lager bei Belastung unterhalb der Belastungsgrenze signifikant erhöht.

Diese Effekte zeigen sich bei Anteilen von 0,1 bis 15 Vol.-% Fe₂O₃. Bei kleineren Anteilen ist keine Verbesserung bezüglich der Belastbarkeit feststellbar. Größere Anteile hingegen führen zu einer Schwächung des Matrixmaterials bzw. des vernetzbaren Bindemittels des Gleitlacks.

Der Anteil des Fe₂O₃ bezogen auf das gesamte Gleitschichtmaterial beträgt vorzugsweise 0,5 bis 8 Vol.-%.

Es konnte gezeigt werden, dass die Spitzenbelastbarkeit an Kurbelwellenlagern bereits bis zu 120 MPa gesteigert werden kann. Diese Spitzenbelastbarkeitswerte liegen auch deutlich über denen, die mit den Materialkombinationen gemäß der EP 0 984 182 A1. Die erfindungsgemäßen Werte werden ansonsten nur von aluminiumbasierten Sputterschichten erreicht.

Es hat sich gezeigt, dass auch die Partikelgröße des Fe₂O₃ von Bedeutung ist. Fe₂O₃ mit einer mittleren Partikelgröße von 0,01 bis 5 µm ist bevorzugt. Besonders vorteilhaft sind Pulver mit einem d50 von 0,1 bis 0,5 µm. d50 bezeichnet den Median der Korngrößen der Partikel, wobei 50 % der Partikel feiner und 50 % der Partikel größer als der jeweils angegebene Wert sind.

Der Festschmierstoffanteil des Gleitschichtmaterials liegt bei einem Anteil von mindestens 15 Vol.-%.

Als Festschmierstoffe kommen Metallsulfide mit Schichtstruktur, Graphit, hexagonales Bornitrid (hBN) und/oder PTFE in Frage. Weiterhin kann das Gleitschichtmaterial Hartstoffe mit einem Anteil von bis zu 5 Vol.-%, insbesondere mit einem Anteil von 3 bis 5 Vol.-% enthalten.

Die Hartstoffe sind vorzugsweise Nitride, Carbide, Boride, Oxide und/oder Metallpulver, wobei die Hartstoffe SiC, Si₃N₄, B₄C₃, kubisches BN, TiO₂ oder SiO₂ und Metallpulver aus Ag, Pb, Au, Sn, Bi und/oder Cu bevorzugt sind.

Eine besondere Ausführungsform sind Mehrschichtsysteme aus Fe₂O₃-haltigen Gleitschichten, wobei diese Mehrschichtsysteme so gestaltet sein können, dass eine obere Schicht als Einlaufschicht, z. B. durch den Zusatz von Hartpartikeln zur Konditionierung der Welle, und die darunterliegende Schicht als Lebensdauerschicht fungiert.

Ein Mehrschichtsystem kann auch so aufgebaut sein, dass unter der Lebensdauerschicht eine zusätzliche Gleitlackschicht aufgebracht ist, die die Betriebssicherheit der Lager dadurch weiter erhöht, dass sie insbesondere bezüglich ihrer Verschleißfestigkeit optimiert ist und so ein vollständiges Durchlaufen auf das Lagermetall hinauszögert.

Eine zusätzliche Schicht zwischen Substrat und Gleitschichtmaterial kann auch bezüglich der Haftung zum Substrat optimiert sein und wie eine Grundierung den Zweck haben, die Anbindung der Gleitlackschicht bzw. der Schicht mit einer Matrix aus hochschmelzenden Thermoplasten und Duroplasten zu verbessern. Dies kann z. B. durch eine geringe oder gar nicht additivierte, wenige Mikrometer dicke Schicht aus dem Matrixmaterial erreicht werden.

Mehrschichtsysteme lassen sich als diskrete Lagen von Schichten und auch als Gradientenschichten realisieren, bei denen die Schichteigenschaften sich kontinuierlich ändern über die Dicke.

Vorzugsweise sind zwei Schichten aus Gleitschichtmaterial auf dem Substrat aufgebracht.

Vorzugsweise ist der Fe₂O₃-Gehalt in der unteren Schicht höher als in der oberen Schicht.

Vorzugsweise werden zwei Schichten auf dem Substrat aufgebracht, wobei eine Schicht aus Gleitschichtmaterial mit Fe₂O₃ und eine Schicht aus Gleitschichtmaterial ohne Fe₂O₃ besteht. Diese Ausführungsform hat den Vorteil, dass die geometrische Anpassung beschleunigt ist, da die obere Schicht dann schneller verschleißt und so die maximale Belastungsfähigkeit schneller hergestellt wird. Weiterer Verschleiß wird dann durch den Fe₂O₃-Gehalt der unteren Schicht verringert.

Eine weitere Ausführungsform eines Mehrschichtsystems sieht vor, dass nur die untere Schicht das Fe₂O₃ enthält, während alle darüber liegenden Schichten kein Fe₂O₃ aufweisen.

Wenn mehr als zwei Schichten aus Gleitschichtmaterial auf dem Substrat aufgebracht werden, ist es von Vorteil, wenn der Fe₂O₃-Anteil von der untersten bis zur obersten Schicht abnimmt. Ein geringer oder kein Fe₂O₃-Anteil in der obersten Schicht hat den Vorteil, dass die geometrische Anpassung beschleunigt ist, da die obere Schicht dann schneller verschleißt und so die maximale Belastungsfähigkeit schneller hergestellt wird. Weiterer Verschleiß wird dann durch den Fe₂O₃-Gehalt der unteren Schicht verringert.

Es ist auch vorgesehen, dass der Fe₂O₃-Anteil innerhalb einer Schicht kontinuierlich von unten nach oben abnimmt.

Das Substrat kann aus einer oder auch aus mehreren Schichten bestehen.

Vorzugsweise weist das Substrat mindestens eine Schicht aus einer Aluminium- oder einer Kupferlegierung auf. Folgende Legierungen sind ebenfalls als Substratmaterial geeignet: Ni-, Sn-, Zn-, Ag-, Au-, Bi- und Fe-Legierungen. Sämtliche Legierungen können sowohl als Lagermetallschicht als auch als dünne Deckschicht eingesetzt werden, wobei die Gleitschicht je nach Zusammensetzung als zusätzliche Einlaufschicht zur Anpassung oder Konditionierung des Wellenmaterials oder als eigenständige Gleitschicht mit hoher Lebensdauer ausgebildet sein kann.

Besonders bevorzugt ist der Einsatz der erfindungsgemäßen Schicht/Schichten als Gleitschicht/Gleitschichten auf CuSn-, CuNiSi-, CuZn-, CuSnZn-, AlSn-, AlSi-, AlSnSi-Lagermetalllegierungen.

Die Gleitschichten können mit oder ohne Zwischenschicht aufgebracht sein. Als Zwischenschichten kommen Nickel, Silber, Kupfer und/oder Eisen in Frage.

Die Dicke der Schicht oder der Schichten im Fall eines Mehrschichtsystems liegt im Bereich von 1 bis 40 µm.

Das Gleitlagerelement kann eine Lagerschale mit einem Durchmesser von bis zu 100 mm sein. In diesem Fall liegt die Dicke der Schicht oder der Schichten bei 5 bis 15 µm.

Wenn das Gleitlagerelement eine Lagerschale mit einem Durchmesser > 100 mm ist, sind Dicken der Schicht oder der Schichten vorn > 15 µm bis 40 µm bevorzugt.

Das Substrat kann eine herkömmliche Gleitschicht umfassen, auf der das Gleitschichtmaterial aufgebracht ist.

Grundsätzlich sind zwei Ausführungsformen möglich. In der ersten Ausführungsform ist die erfindungsgemäße Gleitschicht direkt auf einer Lagermetallschicht aufgebracht. Die zweite Ausführungsform besteht in der Beschichtung eines Substrats, das aus einem Lagermetall mit einer bereits vorliegenden metallischen Gleitschicht, die vorzugsweise durch Sputtern oder galvanische Abscheidung aufgebracht wird, besteht.

Vorzugsweise umfasst das Substrat eine Zwischenschicht, auf der das Gleitschichtmaterial aufgebracht ist. Die Zwischenschicht kann Nickel, Silber, Kupfer und/oder Eisen umfassen.

Bevorzugte Verwendungen sind mediengeschmierte Anwendungen.

Es ist bevorzugt, die Gleitelemente als Gleitlager in Verbrennungsmotoren einzusetzen.

Da die Gleitelemente sich durch eine hohe Spitzenbelastung auszeichnen, ist insbesondere die Verwendung der Gleitelemente als Gleitlager von Kurbelwellen vorgesehen. Weitere bevorzugte Verwendungen sind Gleitelemente als Kolbenhemden und als Kolbenringe, wobei insbesondere die Ringflanken den erfindungsgemäßen Schichtaufbau aufweisen, um zu verhindern, dass es zu Mikroverschweißungen mit der Kolbennutoberfläche kommt.

Im Folgenden sind einige Beispiele mit Versuchsergebnissen aufgeführt.

Die Tabelle 1 enthält nur Kupferlegierungs-Substrate und die Tabelle 2 Aluminiumsubstrate und Ausführungsbeispiele für Zweifachschichten.

**Tabelle 1 (Angaben in Vol.-%)**

| ***Nr.*** | ***Substrat*** | ***Zwi-schenschicht*** | ***Bindemittel*** | ***Fest-schmierstoff*** | ***Hartstoff*** | ***Menge Fe₂O₃*** | ***Max UW Belastung in MPa*** |
|---|---|---|---|---|---|---|---|
| 1 | CuNi2Si | | PAI | 25% hBN | 5% SiC | 5% | 100 |
| R1 | CuNi2Si | | PAI | 30% hBN | 5% SiC | | 90 |
| 2 | CuNi2Si | | PAI | 15% MoS₂ | | 5% | 110 |
| R2 | CuNi2Si | | PAI | 20% MoS₂ | | | 100 |
| 2 | CuNi2Si | | PAI | 15% WS₂ | | 8% | 110 |
| R2 | CuNi2Si | | PAI | 23% WS₂ | | | 95 |
| 3 | CuNi2Si | | PAI | 15% Graphit | | 5% | 90 |
| R3 | CuNi2Si | | PAI | 15% Graphit | | | 85 |
| 3 | CuNi2Si | | PAI | 10% Graphit, 10%PTFE | | 5% | 85 |
| R3 | CuNi2Si | | PAI | 10% Graphit, 10%PTFE | | | 80 |
| 4 | CuNi2Si | | PEEK | 10% MoS₂10% hBN | | 3% | 100 |
| R4 | CuNi2Si | | PEEK | 13% 10% hBN | | | 90 |
| | | | | | | | |
| 5 | CuSn8Ni | Ni | PAI | 15% MoS₂ | | 5% | 110 |
| R5 | CuSn8Ni | Ni | PAI | 20% MoS₂ | | | 100 |
| 6 | CuSn8Ni | | PAI | 30% MoS₂ | | 10% | 100 |
| R6 | CuSn8Ni | | PAI | 40% MoS₂₊ | | | 95 |
| 7 | CuSn8Ni | | PAI | 15% MoS₂, 5% hBN | | 5% | 120 |
| R7 | CuSn8Ni | | PAI | 15% MoS₂, 10% hBN | | | 100 |
| 8 | CuSn8Ni | | PAI | 15% MoS₂ | 5% Si₃N₄ | 5% | 95 |
| R8 | CuSn8Ni | | PAI | 20% MoS₂ | 5% Si₃N₄ | | 85 |
| 9 | CuSn8Ni | Ag | PAI | 30% MoS₂ | | 10% | 115 |
| R9 | CuSn8Ni | Ag | PAI | 40% MoS₂ | | | 105 |
| 10 | CuSn8Ni | | PES | 15% MoS₂ | | 3% | 105 |
| R10 | CuSn8Ni | | PES | 18% MoS₂ | | | 90 |
| | | | | | | | |
| 11 | CuSn10Bi 3 | | PAI | 15% MoS₂ | | 5% | 100 |
| 12 | CuSn10Bi 3 | | EP | 15% hBN | | 5% | 90 |
| R12 | CuSn10Bi 3 | | EP | 20% hBN | | | 80 |
| 13 | CuSn10Bi 3 | | Silikonharz | 10% MoS₂, 10% hBN | | 3% | 90 |
| R13 | CuSn10Bi 3 | | Silikonharz | 13% MoS₂, 10% hBN | | | 80 |
| | | | | | | | |
| 14 | CuPb23Sn | Ni | PAI | 15% MoS₂ | | 5% | 105 |
| 15 | CuPb23Sn | | PAI | 15% MoS₂, 5% hBN | | 5% | 110 |
| 16 | CuPb23Sn | | EP | 15% hBN | 3% TiO₂ | 5% | 100 |

**Tabelle 2 (Angaben in Vol.-%)**

| | | ***1.Schicht*** | ***2.Schicht*** | | | | |
|---|---|---|---|---|---|---|---|
| ***Nr.*** | ***Substrat*** | | ***Bindemittel*** | ***Festschmierstoff*** | ***Hartstoff*** | ***Menge Fe₂O₃*** | ***Max UW Belas-tung in MPa*** |
| 17 | AlSn10Ni2MnCu | | PAI | 15% 5% hBN | | 5% | 85 |
| 18 | AlSn10Ni2MnCu | | PES | 15% MoS₂ | | 3% | 85 |
| | | | | | | | |
| 19 | AlNi2MnCu | | PAI | 15% WS₂ | 5% SiC | 8% | 95 |
| 20 | AlNi2MnCu | | EP | 15% hBN | | 5% | 95 |
| | | | | | | | |
| 21 | AlSn6Si4CuMnC r | | PAI | 10% Graphit 10% PTPE | 3% B₄C | 5% | 80 |
| 22 | AlSn6Si4CuMnC r | | PEEK | 10% MoS₂ 10% hBN | | 3% | 85 |
| | | | | | | | |
| 23 | CuNi2Si | PAI, 10% hBN 5% Fe₂O₃ | PAI | 15% Mos₂ 15% hBN | | | 115 |
| 24 | CuNi2Si | PAI 10% hBN 5% Fe₂O₃ | PAI | 15% MoS₂ | 5% SiC | 3% | 105 |
| 25 | CuNi2Si | PAI 10% hBN 10% Fe₂O₃ | PAI | 15% MoS₂ | | 3% | 110 |

Zur Bewertung der Leistungsfähigkeit wurden Underwood (UW)-Tests durchgeführt. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Die spezifische Belastung wird über die Lagerbreite eingestellt, die Drehzahl beträgt 4000 U/m. Bewertungskriterien sind Gleitschichtermüdung und Verschleiß nach 100h Dauerlauf. Angegeben ist die Grenzbelastung in MPa, bei der auf maximal 5% der Gleitfläche die Schicht bis zum Substrat verschlissen ist oder Ermüdung vorliegt.

Um die Wirkung des FeₑO₃ zu belegen, sind in Tabelle 1 jeweils mit einem R bezeichnete Referenzversuche aufgeführt. Die Versuche zeigen, dass durch den Zusatz von Fe₂O₃ eine Steigerung der Belastbarkeit um bis zu 20% möglich ist.

Bei den Aluminiumsubstraten, Beispiele 17-22, ist jeweils die Ermüdungsfestigkeit des Substrats der limitierende Faktor, jedoch wird auch hier aufgrund einer verbesserten Anpassungsfähigkeit durch das erfindungsgemäße Gleitschichtmaterial eine Verbesserung erzielt. Hauptzweck des erfindungsgemäßen Gleitschichtmaterials ist es jedoch, hierbei die Gleiteigenschaften zu optimieren, wenn in der Legierung nur ein geringer Anteil der Weichphase enthalten ist.

Die Doppelschicht in Beispiel 23 ist so ausgelegt, dass eine erhöhte Anpassungsfähigkeit durch den geringeren Bindemittel- und höheren Festschmierstoffanteil in der oberen Schicht vorliegt.

Beispiel 24 ist eine Schichtauslegung für Wellen mit schlechten Oberflächen wie Kugelgrauguss, die durch die Hartstoffe zusätzlich poliert werden.

In Beispiel 25 steigt die Konzentration des Fe₂O₃ in der unteren Schicht an und erhöht die Verschleißfestigkeit, wobei die obere Schicht vorzugsweise als Anpassungsschicht ausgelegt ist.

## Patentansprüche

1. Gleitlagerelement für mediengeschmierte Anwendungen mit einem Substrat und mit mindestens einer auf dem Substrat aufgebrachten Schicht aus einem Geleitschichtmaterial,
wobei
das Gleitschichtmaterial aus einem, mindestens ein vernetzbares Bindemittel oder mindestens ein hochschmelzendes Thermoplastmaterial aufweisenden Gleitlack besteht, und
das Gleitschichtmaterial Fe₂O₃ enthält,
**dadurch gekennzeichnet, dass** das Substrat eine Rauheit R_{Z} von 1 bis 10 µm aufweist und
dass das Gleitschichtmaterial Festschmierstoffe mit einem Anteil von mindestens 15 Vol.-% enthält.

2. Gleitelement nach Anspruch 1, **dadurch gekennzeichnet,** dass das vernetzbare Bindemittel des Gleitlackes aus PAI, PI, Epoxyharz, PBI, und/oder Silikonharz besteht.

3. Gleitelement nach Anspruch 1, **dadurch gekennzeichnet,** dass das Bindemittel ein mittels UV-Strahlung aushärtendes Bindemittel ist.

4. Gleitelement nach Anspruch 1, **dadurch gekennzeichnet,** dass das hochschmelzende Thermoplastmaterial aus Polyarylat, PEEK und/oder PES besteht.

5. Gleitelement nach einem der Ansprüche 1 bis 4, **dadurch gekennzeich**net, dass der Anteil des Fe₂O₃ bezogen auf das gesamte Gleitschichtmaterial 0,1 bis 15 Vol.-% beträgt.

6. Gleitelement nach einem der Ansprüche 1 bis 5, **dadurch gekennzeich**net, dass das Gleitschichtmaterial Hartstoffe mit einem Anteil von bis zu 5 Vol.-% enthält.

7. Gleitelement nach einem der Ansprüche 1 bis 6, **dadurch gekennzeich**net, dass zwei Schichten aus Gleitschichtmaterial auf dem Substrat aufgebracht sind.

8. Gleitelement nach Anspruch 7, **dadurch gekennzeichnet,** dass der Fe₂O₃-Gehalt in der unteren Schicht höher ist als in der oberen Schicht.

9. Gleitelement nach einem der Ansprüche 1 bis 8, **dadurch gekennzeichnet,** dass zwei Schichten auf dem Substrat aufgebracht sind, wobei eine Schicht aus Gleitschichtmaterial mit Fe₂O₃ und eine Schicht aus Gleitschichtmaterial ohne Fe₂O₃ besteht.

10. Gleitelement nach Anspruch 9, **dadurch gekennzeichnet,** dass die untere Schicht das Fe₂O₃ enthält.

11. Gleitelement nach einem der Ansprüche 1 bis 10, **dadurch gekennzeichnet,**
dass mehr als zwei Schichten aus Gleitschichtmaterial auf dem Substrat aufgebracht sind und
dass der Fe₂O₃-Anteil von der untersten bis zur obersten Schicht abnimmt.

12. Gleitelement nach einem der Ansprüche 1 bis 11, **dadurch gekennzeichnet,** dass der Fe₂O₃ -Anteil innerhalb der Schicht kontinuierlich von unten nach oben abnimmt.

13. Gleitelement nach einem der Ansprüche 1 bis 12, **dadurchgekennzeichnet,** dass das Substrat mindestens eine Schicht aus einer Al- oder einer Cu-Legierung aufweist.

14. Verwendung des Gleitelementes nach Anspruch 1 für mediengeschmierte Anwendungen.

15. Verwendung des Gleitelements nach Anspruch 1 als Gleitlager in Verbrennungsmotoren oder als Gleitlager von Kurbelwellen oder als Kolbenring oder als Kolbenhemd.

## Claims

1. Plain bearing element for media-lubricated applications having a substrate and having at least one layer which is applied to the substrate and which comprises a sliding layer material,
the sliding layer material comprising a sliding lacquer which has at least one cross-linkable binding agent or at least one high-melting thermoplastic material, and
the sliding layer material containing Fe₂O₃,
**characterised in that** the substrate has a roughness R_{z} of from 1 to 10 µm and
**in that** the sliding layer material contains solid lubricants at a proportion of at least 15% by volume.

2. Sliding element according to claim 1, **characterised in that** the cross-linkable binding agent of the sliding lacquer comprises PAI, PI, epoxy resin, PBI and/or silicone resin.

3. Sliding element according to claim 1, **characterised in that** the binding agent is a binding agent which hardens by means of UV radiation.

4. Sliding element according to claim 1, **characterised in that** the high-melting thermoplastic material comprises polyarylate, PEEK and/or PES.

5. Sliding element according to any one of claims 1 to 4, **characterised in that** the proportion of Fe₂O₃ with respect to the entire sliding layer material is from 0.1 to 15% by volume.

6. Sliding element according to any one of claims 1 to 5, **characterised in that** the sliding layer material contains hardeners at a proportion of up to 5% by volume.

7. Sliding element according to any one of claims 1 to 6, **characterised in that** two layers of sliding layer material are applied to the substrate.

8. Sliding element according to claim 7, **characterised in that** the Fe₂O₃ content in the lower layer is higher than in the upper layer.

9. Sliding element according to any one of claims 1 to 8, **characterised in that** two layers are applied to the substrate, one layer comprising sliding layer material with Fe₂O₃ and one layer comprising sliding layer material without any Fe₂O₃.

10. Sliding element according to claim 9, **characterised in that** the lower layer contains the Fe₂O₃.

11. Sliding element according to any one of claims 1 to 10, **characterised in that** more than two layers of sliding layer material are applied to the substrate, and
the Fe₂O₃ proportion decreases from the lowest layer to the uppermost layer.

12. Sliding element according to any one of claims 1 to 11, **characterised in that** the Fe₂O₃ proportion within the layer continuously decreases from the top to the bottom.

13. Sliding element according to any one of claims 1 to 12,
**characterised in that** the substrate has at least one layer of an Al or Cu alloy.

14. Use of the sliding element according to claim 1 for media-lubricated applications.

15. Use of the sliding element according to claim 1 as a plain bearing in internal combustion engines or as a sliding bearing for crankshafts or as a piston ring or as a piston skirt.

## Revendications

1. Elément formant palier de glissement conçu pour des applications à lubrification par fluides, comprenant un substrat et au moins une couche déposée sur ledit substrat et constituée d'un matériau formant couche de glissement,
le matériau de la couche de glissement consistant en un vernis de glissement, présentant au moins un liant réticulable ou au moins une matière thermoplastique à point de fusion élevé, et
ledit matériau de la couche de glissement renfermant du Fe₂O₃,
**caractérisé par le fait que** le substrat présente une rugosité R_{Z} de 1 à 10 µm; et
que le matériau de la couche de glissement renferme des lubrifiants solides selon une proportion d'au moins 15 % en volume.

2. Elément de glissement selon la revendication 1, **caractérisé par le fait que** le liant réticulable du vernis de glissement consiste en du PAI, en du PI, en une résine époxy, en du PBI et/ou en une résine de silicone.

3. Elément de glissement selon la revendication 1, **caractérisé par le fait que** le liant est un liant apte au durcissement sous l'action d'un rayonnement UV.

4. Elément de glissement selon la revendication 1, **caractérisé par le fait que** la matière thermoplastique à point de fusion élevé consiste en un polyacrylate, en du PEEK et/ou en du PES.

5. Elément de glissement selon l'une des revendications 1 à 4, **caractérisé par le fait que** la proportion du Fe₂O₃ représente de 0,1 à 15 % en volume, rapportée à l'ensemble du matériau de la couche de glissement.

6. Elément de glissement selon l'une des revendications 1 à 5, **caractérisé par le fait que** le matériau de la couche de glissement renferme des substances dures selon une proportion atteignant jusqu'à 5 % en volume.

7. Elément de glissement selon l'une des revendications 1 à 6, **caractérisé par le fait que** deux couches, constituées de matériau formant couche de glissement, sont déposées sur le substrat.

8. Elément de glissement selon la revendication 7, **caractérisé par le fait que** la teneur en Fe₂O₃ est plus élevée dans la couche inférieure que dans la couche supérieure.

9. Elément de glissement selon l'une des revendications 1 à 8, **caractérisé par le fait que** deux couches sont déposées sur le substrat, une couche étant constituée d'un matériau formant couche de glissement qui contient du Fe₂O₃, et une couche étant constituée d'un matériau formant couche de glissement qui est exempt de Fe₂O₃.

10. Elément de glissement selon la revendication 9, **caractérisé par le fait que** la couche inférieure renferme le Fe₂O₃.

11. Elément de glissement selon l'une des revendications 1 à 10, **caractérisé par** le fait
que plus de deux couches, constituées de matériau formant couche de glissement, sont déposées sur le substrat ; et
que la proportion de Fe₂O₃ décroît depuis la couche inférieure extrême jusqu'à la couche supérieure extrême.

12. Elément de glissement selon l'une des revendications 1 à 11, **caractérisé par le fait que** la proportion de Fe₂O₃ décroît continûment de bas en haut à l'intérieur de la couche.

13. Elément de glissement selon l'une des revendications 1 à 12, **caractérisé par le fait que** le substrat comporte au moins une couche en un alliage de Al ou de Cu.

14. Utilisation de l'élément de glissement conforme à la revendication 1, pour des applications à lubrification par fluides.

15. Utilisation de l'élément de glissement conforme à la revendication 1, en tant que palier de glissement dans des moteurs à combustion interne ou en tant que palier de glissement de vilebrequins, voire en tant que segment de piston ou en tant que jupe de piston.
